# EUROPEAN PATENT SPECIFICATION

(11) **EP 1 034 070 B1**
(45) Date of publication and mention of the grant of the patent: **17.08.2005**
(21) Application number: 97945598.7
(22) Date of filing: 31.10.1997
(51) Int. Cl.: B29C 47/14, B29C 47/70

(54) **UNIVERSAL FLOW CHANNEL**
UNIVERSALER STRÖMUNGSKANAL
CANAL D'ECOULEMENT UNIVERSEL

(43) Date of publication of application: 13.09.2000
(73) Proprietor: THE GOODYEAR TIRE & RUBBER COMPANY, Akron, Ohio 44316-0001 (US)
(72) Inventor: LEE, Ching-Chih, Hudson, OH 44236 (US); LOOMAN, Ernest, Wilford, Jr., Tallmadge, OH 44278 (US); BURG, Gary, Robert, Canton, OH 44708 (US); TURNER, Bruce, Joseph, Wadsworth, OH 44281 (US); MARSHALL, Malcolm, George, Wadsworth, OH 44281 (US)
(74) Representative: Kutsch, Bernd
(86) International application number: PCT/US1997/020054
(87) International publication number: WO 1999/022927

(56) References cited:
- EP-A- 0 226 434
- EP-A- 0 367 749
- EP-A- 0 657 272
- US-A- 3 956 056
- US-A- 5 221 541
- PATENT ABSTRACTS OF JAPAN vol. 016, no. 087 (M-1217), 3 March 1992 & JP 03 270922 A (BRIDGESTONE CORP), 3 December 1991,

## Description

### Technical Field

This invention pertains to the an of methods and apparatuses for directing the flow of polymeric material from a supply source to one or more shaping dies.

### Background Art

In the art it is known to provide means for directing the flow of various types of polymeric material from a supply source such as an extruder to one or more shaping dies. There are several factors which affect how the material flows within the flow channel. Considerations of wall friction, stretching and compression of the material, pressure loss and clamping force arc factored in flow channel construction. For example, wall friction tends to slow the flow of material near the walls so that the flow of material near the center is faster, producing undesirable results.

European Patent Document No. 0 226 434 discloses an apparatus according to the preamble of claim 1. A polymer sheet is produced by advancing a workpiece of polymeric material in the longitudinal direction between two pairs of opposed working surfaces of a die, so that the material of the workpiece flows simultaneously in the longitudinal direction (Z) and the lateral direction (Y) while decreasing in thickness in the (X) direction. A first pair of working surfaces of the die include opposed protrusions that squeeze the workpiece more at the center than at the edges. In this disclosure, the outlet ends of the protrusions extend the entire width of the channel between the second pair of working surfaces and the workpiece is pressed between tow protrusions.

Japanese Patent Document No. 0327099 discloses a pair of truncated quadrangular pyramid-like projections provided in a converging die head. The width of each projection increases toward the efflux port and the top faces of the projections are nearly parallel to each other. The efflux port end of each of the projections is sloped away from the top face which provides a slight increase in depth of the flow channel.

Moving the material through turns or over/around objects may cause unpredictable visco-elastic effects. The problem of non-uniform material flow and undesirable visco-elastic effects are addressed in the present invention.

The present invention is directed to the downstream region of a flow channel in an apparatus for directing the flow of polymeric material from a supply source to one or more shaping dies. The inventive construction of the downstream region provides for increased uniformity of flow across the entire width of the exit orifice. The present invention is further directed to balancing the flow of polymeric material between two or more flow passages.

### Disclosure of the Invention

In accordance with the practice of the present invention, there is provided an apparatus for directing the flow of polymeric material from a supply source to one or more shaping dies and a flow directing for use in such an apparatus as defined in the claims.

One advantage of the present invention is the reduction of visco-elastic effects in the extruded material.

Another advantage of the present invention is the improved uniformity of flow of polymeric material across the entire width of an exit orifice.

Another advantage of the present invention is that the flow of material between two separate flow branches of a flow channel is balanced.

Another advantage of the invention is the reduction of the projected area of the region filled with the polymeric material which decreases the required clamping force for a predetermined flow rate.

Still other benefits and advantages of the invention will become apparent to those skilled in the art upon a reading and understanding of the following specification.

### Brief Description of the Drawings

The invention may take physical form in certain parts and arrangement of parts, a preferred embodiment of which will be described in detail in this specification and illustrated in the accompanying drawings which form a part hereof and wherein:
Figure 1 is a side sectional view of an apparatus for directing the flow of polymeric materials from an extruder to one or more shaping dies.
Figure 2 is a top sectional view of a downstream region of a flow channel.
Figure 3 is a side sectional view of the downstream region of a flow channel taken along the line 3-3 of Figure 2.
Figures 3A and 3B are enlarged views of a section of Figure 3.
Figures 4-7 are cross-sectional views of the downstream region of the flow channel.
Figure 8 is a schematic representation of velocity vectors associated with the flow of polymeric material in the flow channel of the present invention.
Figures 9-12 are top views of various embodiments of a flow directing insert according to the invention.
Figure 13 is an exploded view of a shaping die assembly for shaping extruded material.
Figure 14 is a top sectional view of another embodiment of the downstream region of a flow channel according to the invention.

### Detailed Description of the Invention

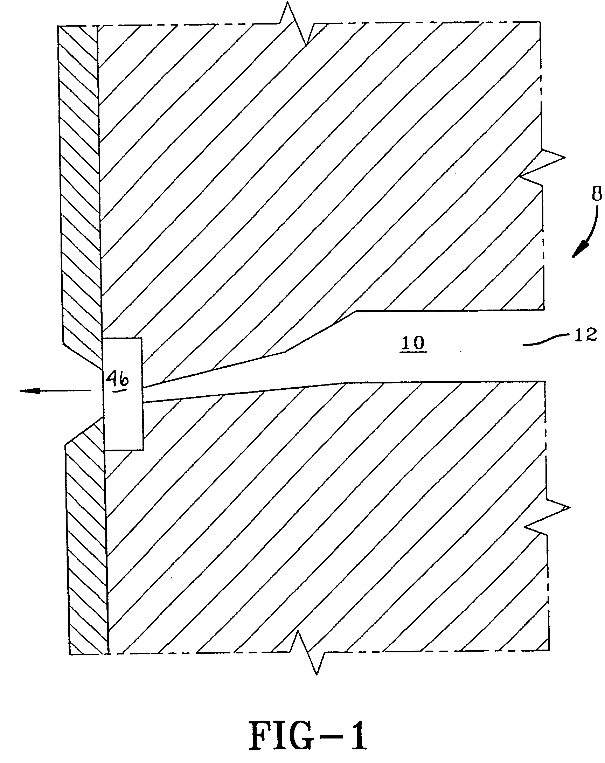

Referring now to the drawings wherein the showings are for purposes of illustrating a preferred embodiment of the invention only and not for purposes of limiting the same. Figure 1 shows an apparatus 8 having at least one flow channel 10 therein for directing the flow of polymeric material. The present invention is directed to the design characteristics of a flow channel 10 which provide more uniform flow to the shaping die, particularly when the material is polymeric in nature. In particular, the present invention is directed to the downstream region 11 of flow channel 10 just prior to the material flowing into a die assembly 46. Flow channel 10 includes an inlet passage 12 which communicates with a supply source as is known in the art and is not shown here. It is contemplated that the invention provides the best results when the polymeric material has a symmetric velocity distribution with respect to the centerline of the flow cross-section immediately prior to flowing into the downstream region 11.

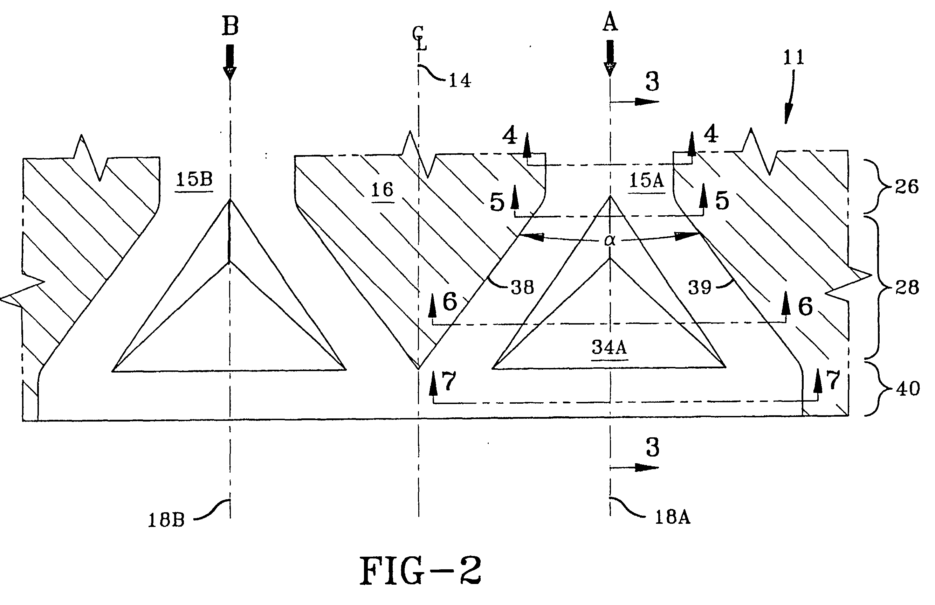

With respect to Figure 2. a sectional view of a downstream region 11 of one embodiment of a flow channel is shown. In this embodiment, the flow of polymeric material from the supply source, not shown, is split into first and second streams, indicted by arrows A, B before cntering downstream region 11. The downstream region 11 is generally symmetric about centerline 14 and includes first and second flow branches 15A, 15B. Each of the branches 15A, 15B also have respective centerlines 18A, 18B which provide general lateral symmetry within the branches. Located within each of the flow branches 15A, 15B is a flow directing insert 34A.

With particular attention to the right branch 15A, the features of the downstream region 11 of flow channel 10 will be more fully described. For ease of illustration, the downstream region 11 of flow channel 10 will be described in terms of "upper walls", "lower walls", "lateral direction", etc. in accordance with the accompanying drawings. However, it should be readily understood by those skilled in the relevant art that the apparatus 8 may have other orientations during use.

The right branch 15A is a continuous passage from entry zone 26 to exit zone 40. The entry zone 26, receives the preferably symmetric flow of polymeric material. Generally, the flow in the entry zone 26 is in a direction parallel to the main centerline 14. In a second zone, also called the spread out and balancing zone 28, the width of the first branch 15A increases in a uniform manner symmetric about right branch centerline 18A. In the spread out and balancing zone 28, the side walls 38. 39 diverge to form a triangular region associated with an included angle, α. The included angle, α, may he between 40° and 120°. In the preferred embodiment, angle α is between 60° and 90°. The flow-directing insert 34A is positioned within the spread out and balancing zone 28. As shown in Figure 2, the insert 34A is spaced from each of the side walls 38, 39 so that the flow of material is not interrupted near side walls 38, 39. The shape of the insert 34A urges the polymeric material toward the side walls 38, 39 of the right branch 15A by restricting the flow along the centerline 18A. The flow-directing insert 34A further acts to spread out and balance the flow, and compress the polymeric material.

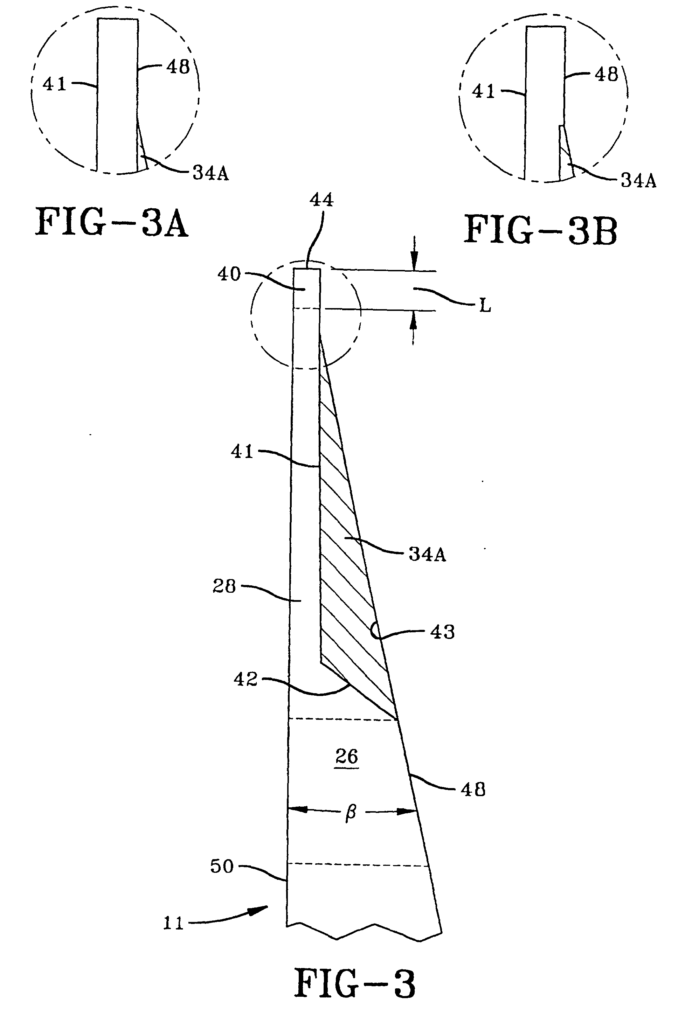

With reference to Figure 3, in the downstream region 11 of flow channel 10, the dashed lines serve to illustrate the location of entry zone 26, spread out and balancing zone 28, and exit zone 40. As is shown, the flow directing insert 34A includes a generally planar top surface 41 and a bottom surface 43 which is positioned adjacent to the lower wall 48.

Another feature of the invention illustrated in Figure 3 is the preferred arrangement of upper wall 50 with respect to lower wall 48. Upper wall 50 and lower wall 48 are preferably not parallel, but are disposed at an angle β to one another for gradually decreasing the channel height along the length of the downstream region. The preferred range for β is between 5° and 30°.

Yet another feature of the invention illustrated in Figure 3 is the more abrupt decrease in the flow channel height at the center of the flow branch 15A due to the presence of flow directing insert 34A. Throughout the downstream region 11 of the flow channel 10. the channel height decreases without increasing, even in the region encompassing the flow directing insert 34A. It has been found that using a flow-directing insert which first compresses the polymeric material and then allows expansion in the flow creates undesirable visco-elastic effects in the polymeric material. Therefore, the preferred flow-directing insert 34A causes the channel height in the spread out and balancing zone 28 to decrease monotonically and docs not deepen again as the polymeric material flows over the insert 34A. The top surface 41 of the flow directing insert 34A is generally planar. In the exit zone 40, the bottom wall 48 of the flow branch 15A is also preferably planar. In a preferred embodiment, the bottom wall 48 is flush with the plane of the top surface 41. In a practical application, there may be a slight step-down at the end of the insert 34A as shown in Figure 38. The preferred

The length, L, of the exit zone 40 is herein defined as the distance from the end of the flow-directing insert 34A to an exit orifice 44. The length of the exit zone 40 effects both the pressure loss and the visco-elastic effects. The longer the exit zone 40, the greater the pressure loss and the lower the visco-elastic effects and vice-versa. Therefore, in the preferred embodiment, the length of the exit zone 40 is optimized to provide acceptable ranges of pressure loss and visco-elastic effects.

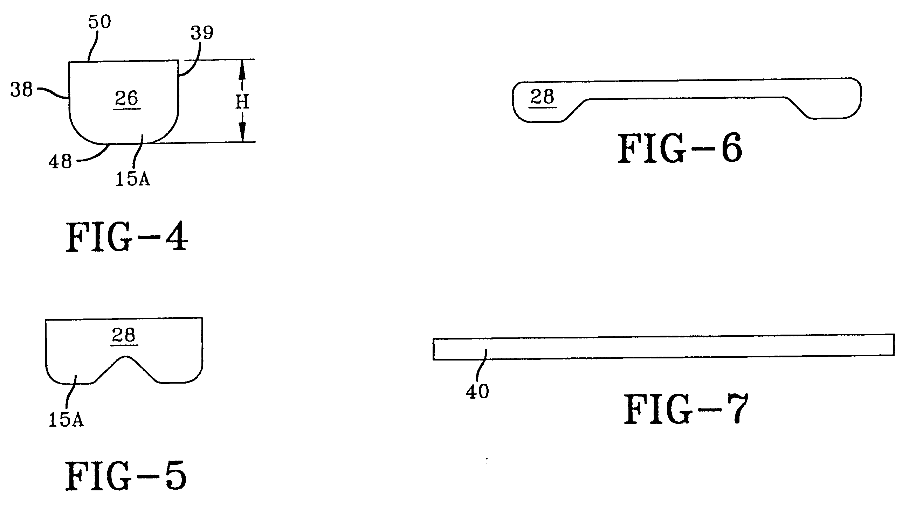

With particular reference to Figures 4-7, the variances in the cross-sectional shape of a preferred embodiment of the right branch 15A of the downstream region 11 are shown. Each of the sectional views are taken perpendicular to the centerline 18A of the right branch 15A. For the sake of simplicity, right branch 15A will be discussed in detail below. However, left branch 15B, is a mirror image of right branch 15A with centerline 14 being the axis of symmetry.

Figure 4 is a sectional view of the entry zone 26 showing upper wall 50, lower wall 48, and side walls 38, 39. As is shown, in the preferred embodiment, the junctions of lower wall 37 with side walls 38, 39 are contoured.

Figure 5 is directed to the initial portion of the spread out and balancing zone 28 and shows how the flow-directing insert 34A effects the cross-sectional shape of right branch 15A. The flow-directing insert 34A is generally symmetrically positioned within right branch 15A. In other words, a centerline of the flow-directing insert is aligned with the centerline of the right branch 15A in the spread out and balancing zone 28. In the spread out and balancing zone 28, the associated width of right branch 15A gradually increases along a length thereof, and the channel height gradually decreases.

Figure 6 shows a sectional view further downstream than that shown in Figure 5, but before the exit zone 40.

Figure 7 is a sectional view of the exit zone 40. In a preferred embodiment, the channel height remains constant in the exit zone 40. It is, however, within the scope of the present invention to decrease the channel height along its length in exit zone 40.

Referring again to Figure 2, in one embodiment of the invention, the exit zone 40 is associated with a lateral width which is greater than the maximum width of first branch 15A. It is within the scope of the present invention for exit zone 40 to extend laterally so that it communicates with both right flow branch 15A and left flow branch 15B.

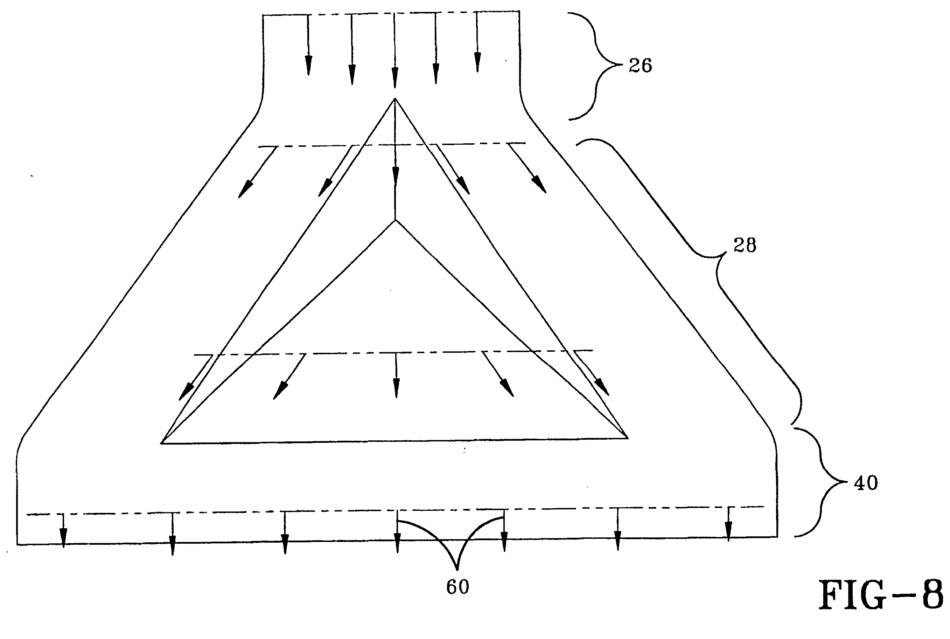

With respect to Figure 8, the features of the downstream region 11 cause the exiting vectors 60 associated with the velocity of the polymeric material to be substantially equal and parallel to the centerline 18A across the entire width of the exit zone 40. In prior art extruder flow channels, the flow tends to be faster in the center, which causes poor gauge control. Such undesirable effects are greatly reduced by the flow channel construction of the present invention because of the halanced flow and substantially uniform velocity across the exit zone 40.

The design of the downstream region 11 of flow channel 10 of the present invention can be used for single and multiple cavity extrusions. When the polymeric material passes from the exit zone 40 through more than one die cavity, improvement is seen in a balancing of the flow between cavities as well as in uniformity within a given cavity. This versatility for single and multiple cavity extrusions serves to reduce or eliminate flow channel change-overs, and thus increase productivity.

The required clamping force for a specified flow rate of polymeric material is reduced in the flow channel 10 of the present invention because the island 16 dividing the two streams A and B of Figure 2 greatly reduces the projected area associated with required clamping force. Prior art extruders are equipped to provide higher clamping force for the same flow rate than needed with the flow channel 10. Therefore, use of the inventive flow channel 10 with prior art extruders may allow for increased flow rate or throughput when utilizing similar clamping forces.

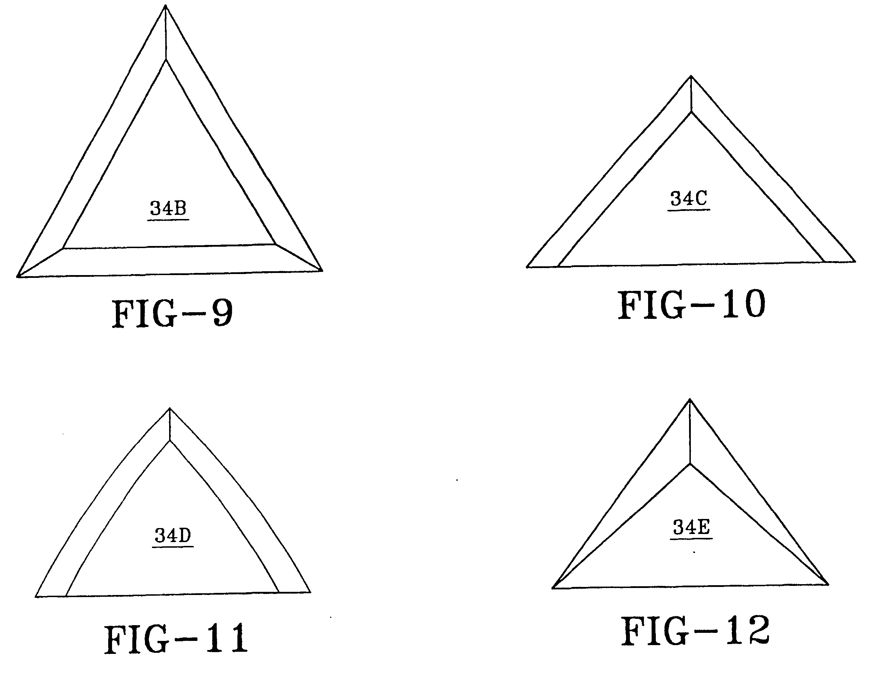

Referring now to Figures 9-12 different embodiments of a flow-directing insert 34B-34E are shown. The design of inserts 34B-34E seeks to achieve uniform gap-wise average velocity across the exit opening, while minimizing pressure loss.

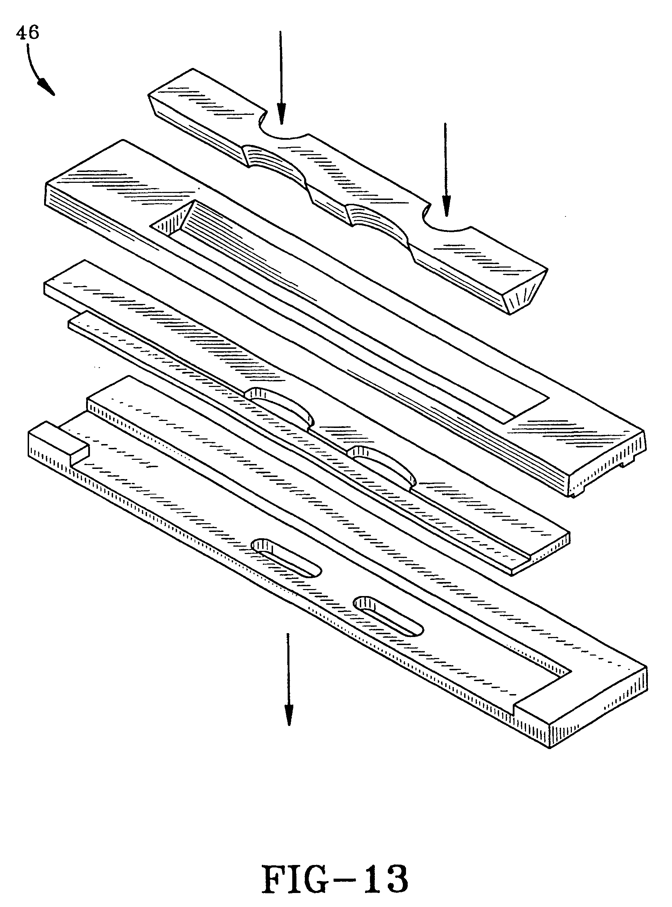

Figure 13 is an exploded view of a shaping die assembly 46 able to receive material that flows from the flow channel 10.

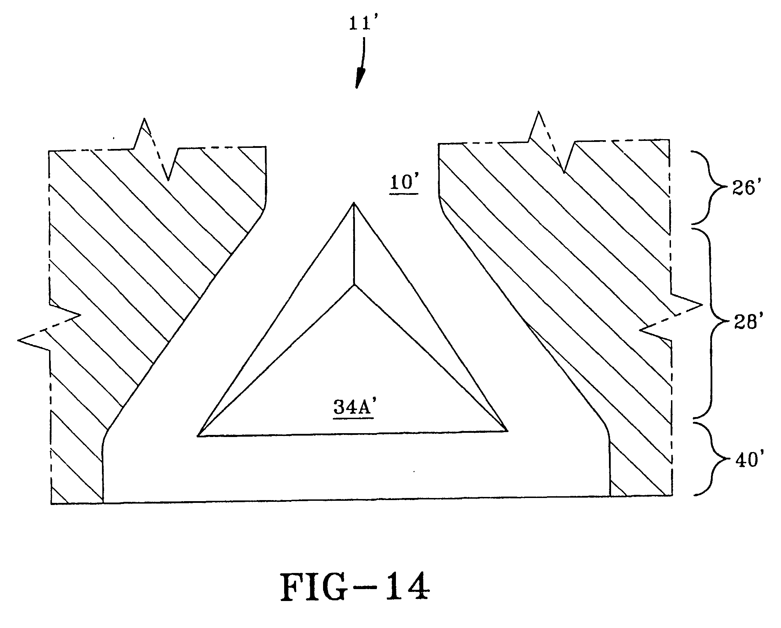

In another embodiment of the invention, shown in Figure 14, the flow of polymeric material enters the downstream region 11'. In this embodiment, the features of the flow channel 10' are similar to those described above with respect to the entry zone 26' and the spread out and balancing zone 28'. In the exit zone 40', the lateral width is slightly greater than the maximum width of the flow directing insert 34A'. In this embodiment, the exit zone 40' does not communicate with a second flow branch as shown in the embodiment of Figure 2. It is within the scope of the present invention to provide an apparatus 8 having one or more of the flow channels 10' shown in Figure 14. each having discreet exit zones 40'.

It is further within the scope of the present invention to provide an apparatus with more than the two flow branches 15A, 15B as illustrated in Figure 2, wherein the exit zone 40 is continuous. It is further within the scope of the present invention to provide any combination of flow channels/flow branches having continuous exit zones 40 or discreet exit zones 40'.

The preferred embodiments of the invention have been described, hereinabove. It will be apparent to those skilled in the art that the above methods may incorporate changes and modifications without departing from the general scope of this invention. It is intended to include all such modifications and alterations in so far as they come within the scope of the appended claims.

Having ths described the invention, it is now claimed:

## Claims

1. Apparatus (8) for directing the flow of polymeric material from a supply source to one or more shaping dies, the apparatus having a flow channel (10) therein, the flow channel having an inlet (12) communicating with a supply orifice for receiving the material, the flow channel being defined by opposite side walls (38, 39) an upper wall (50), and a lower wall (48), the flow channel including a downstream region (11) having a first zone (26) in flow communication with the inlet, and a second zone (28) in flow communication with the first zone, the first and second zones being associated with a common centerline (18A), the side walls of the second zone diverging in opposite lateral directions generally symmetrically about the centerline and associated with an angle, α, the apparatus being **characterized by**:
the upper wall (50) being in a common plane throughout the first and second zones (26, 28); and,
a flow directing insert (34A) located within the second zone (28) positioned adjacent to the lower wall (48) and spaced from the opposite side walls (38, 39), the flow directing insert having sloped side surfaces (42) intersecting a generally planar top surface (41), the top surface being spaced from the upper wall (50) and generally parallel thereto.

2. The apparatus of claim 1 further **characterized by**:
a third zone (40) in flow communication with the second zone for directing the flow of the material into the one or more shaping dies (46), the lower wall of the third zone being generally flush with the planar top surface of the flow directing insert.

3. The apparatus of claim 1 further **characterized by**:
a third zone (40) in flow communication with the second zone for directing the flow of the material into the one or more shaping dies (46), the lower wall of the third zone being associated with a plane spaced from the plane of the top surface of the flow directing insert.

4. The apparatus of claim 2 further **characterized by**:
the flow directing insert (34A) having an associated maximum lateral width; and,
the third zone including an exit orifice (44), the exit orifice being associated with an exit orifice width, wherein the exit orifice width is greater than the associated maximum lateral width of the flow directing insert.

5. The apparatus of claim 3 further **characterized by**:
the flow directing insert (34A) having an associated maximum lateral width; and,
the third zone including an exit orifice (44), the exit orifice being associated with an exit orifice width, wherein the exit orifice width is greater than the associated maximum lateral width of the flow directing insert.

6. The apparatus of claim 1 wherein α is between 40° and 120°.

7. The apparatus of claim 1 wherein the upper wall and the lower wall of the flow channel in the second zone are disposed at an angle β to one another to affect a gradual decrease in a channel height in the second zone.

8. The apparatus of claim 7 wherein angle β is between 5° and 30°.

9. The apparatus (8) of claim 1 wherein the downstream region (11) has a pair of diverging flow branches (15A, 15B) in flow communication with the inlet, each of the flow branches being defined by opposite side walls (38,39), an upper wall (50), and a lower wall (48) and including a first zone (26) in flow communication with the inlet, and a second zone (28) in flow communication with the first zone, the first and second zones being associated with a common centerline (18A, 18B), the side walls of the second zone diverging in opposite lateral directions generally symmetrically about the centerline and associated with an angle, α, the apparatus including means for restricting the flow of the polymeric material along the centerlines (18A, 18B) while urging the polymeric material toward the respective opposite side walls (38, 39).

10. The apparatus of claim 9 further **characterized by**:
each of the flow branches including a third zone (40) in flow communication with the second zone for directing the flow of the material into the one or more shaping dies (46), the lower wall of the third zone being generally flush with the planar top surface of the flow directing insert.

11. The apparatus of claim 9 further **characterized by**:
each of the flow branches including a third zone (40) in flow communication with the second zone for directing the flow of the material into the one or more shaping dies (46), the lower wall of the third zone being associated with a plane spaced from the plane of the top surface of the flow directing insert.

12. The apparatus of claim 10 further **characterized by**:
the flow directing insert (34A) having an associated maximum lateral width; and,
each of the third zones (40) including an exit orifice (44), the exit orifice being associated with an exit orifice width, wherein the exit orifice width is greater than the associated maximum lateral width of the flow directing insert.

13. The apparatus of claim 11 further **characterized by**:
the flow directing insert (34A) having an associated maximum lateral width; and,
each of the third zones (40) including an exit orifice (44), the exit orifice being associated with an exit orifice width, wherein the exit orifice width is greater than the associated maximum lateral width of the flow directing insert.

14. The apparatus of claim 10 further **characterized by**:
each of the flow branches including a third zone (40); and,
an exit orifice (44) common to each of the third zones.

15. The apparatus of claim 11 further **characterized by**:
each of the flow branches including a third zone (40); and,
an exit orifice (44) common to each of the third zones.

16. The apparatus of claim 9 wherein α is between 40° and 120°.

17. The apparatus of claim 9 wherein the upper wall and the lower wall of the flow channel in the second zone are disposed at an angle β to one another to affect a gradual decrease in a channel height in the second zone.

18. The apparatus of claim 17 wherein angle β is between 5° and 30°.

19. A flow directing insert (34A) for use in an apparatus (8) for directing the flow of polymeric material from a supply source to one or more shaping dies according to one of the claims 1 to 18, the flow directing insert having a triangular bottom surface (43), a triangular top surface (41) non-parallel to the bottom surface (43), and sloping side surfaces (42) extending between the bottom surface and the top surface, the flow directing insert (34A) being **characterized by**:
the side surfaces (42) intersecting to form a forward edge.

## Patentansprüche

1. vorrichtung (8) zum Lenken des Flusses von Polymermaterial von einer Zufuhrquelle zu einer oder mehr Formdüsen, wobei die Vorrichtung einen Fließkanal (10) darin aufweist, wobei der Fließkanal einen Einlass (12) hat, der mit einer Zufuhröffnung zur Aufnahme des Materials kommuniziert, wobei der Fließkanal durch einander gegenüberliegende Seitenwände (38, 39), eine obere Wand (50) und eine untere Wand (48) definiert ist, wobei der Fließkanal einen stromabwärts befindlichen Bereich (11) mit einer ersten Zone (26) in Fließkommunikation mit dem Einlass und einer zweiten Zone (28) in Fließkommunikation mit der ersten Zone enthält, wobei der ersten und zweiten Zone eine gemeinsame Mittellinie (18A) zugeordnet ist, wobei die Seitenwände der zweiten Zone in gegenüberliegenden seitlichen Richtungen im allgemeinen symmetrisch zur Mittellinie divergieren und einem Winkel, α, zugeordnet sind, wobei die Vorrichtung **dadurch gekennzeichnet ist, dass** die obere Wand (50) sich in der gesamten ersten und zweiten Zone (26, 28) in einer gemeinsamen Ebene befindet; und durch einen flusslenkenden Einsatz (34A), der sich innerhalb der zweiten Zone (28) befindet, zur unteren Wand (48) benachbart positioniert und von den einander gegenüberliegenden Seitenwänden (38, 39) beabstandet, wobei der flusslenkende Einsatz abfallende Seitenflächen (42) aufweist, die eine im allgemeinen planare obere Fläche (41) schneiden, wobei die obere Fläche von der oberen Wand (50) beabstandet und im allgemeinen parallel dazu ist.

2. Die Vorrichtung gemäß Anspruch 1, weiter **gekennzeichnet durch** eine dritte Zone (40) in Fließkommunikation mit der zweiten Zone, zum Lenken des Materialflusses in die eine oder mehr Formdüsen (46), wobei die untere Wand der dritten Zone im allgemeinen bündig mit der planaren oberen Fläche des flusslenkenden Einsatzes ist.

3. Die Vorrichtung gemäß Anspruch 1, weiterhin **gekennzeichnet durch** eine dritte Zone (40) in Fließkommunikation mit der zweiten Zone, zum Lenken des Materialflusses in die eine oder mehr Formdüsen (46), wobei der unteren Wand der dritten Zone eine Ebene zugeordnet ist, die von der Ebene der oberen Fläche des flusslenkenden Einsatzes beabstandet ist.

4. Die Vorrichtung gemäß Anspruch 2, weiterhin **dadurch gekennzeichnet, dass** der flusslenkende Einsatz (34A) eine zugehörige maximale seitliche Breite hat; und dass die dritte Zone eine Austrittsöffnung (44) enthält, wobei der Austrittsöffnung eine Austrittsöffnungsbreite zugeordnet ist, wobei die Austrittsöffnungsbreite größer ist als die zugehörige maximale seitliche Breite des flusslenkenden Einsatzes.

5. Die Vorrichtung gemäß Anspruch 3, weiterhin **dadurch gekennzeichnet, dass** der flusslenkende Einsatz (34A) eine zugehörige maximale seitliche Breite hat; und dass die dritte Zone eine Austrittsöffnung (44) enthält, wobei der Austrittsöffnung eine Austrittsöffnungsbreite zugeordnet ist, wobei die Austrittsöffnungsbreite größer ist als die zugehörige maximale seitliche Breite des flusslenkenden Einsatzes.

6. Die Vorrichtung gemäß Anspruch 1, wobei α zwischen 40° und 120° beträgt.

7. Die Vorrichtung gemäß Anspruch 1, wobei die obere Wand und die untere Wand des Fließkanals in der zweiten Zone in einem Winkel β zueinander angeordnet sind, um ein allmähliches Abnehmen in einer Kanalhöhe in der zweiten Zone zu bewerkstelligen.

8. Die Vorrichtung gemäß Anspruch 7, wobei der Winkel β zwischen 5° und 30° beträgt.

9. Die Vorrichtung (8) gemäß Anspruch 1, wobei das stromabwärts befindliche Gebiet (11) ein Paar divergierender Fließarme (15A, 15B) in Fließkommunikation mit dem Einlass aufweist, wobei jeder der Fließarme durch einander gegenüberliegende Seitenwände (38, 39), eine obere Wand (50) und eine untere Wand (48) definiert ist und eine erste Zone (26) in Fließkommunikation mit dem Einlass und eine zweite Zone (28) in Fließkommunikation mit der ersten Zone enthält, wobei der ersten und zweiten Zone eine gemeinsamen Mittellinie (18A, 18B) zugeordnet ist, wobei die Seitenwände der zweiten Zone in gegenüberliegenden seitlichen Richtungen im allgemeinen symmetrisch um die Mittellinie divergieren und einem Winkel, α, zugeordnet sind, wobei die Vorrichtung Mittel enthält, um den Fluss des Polymermaterials entlang der Mittellinien (18A, 18B) einzuschränken, während das Polymermaterial zu den jeweiligen einander gegenüberliegenden Seitenwänden (38, 39) gezwungen wird.

10. Die Vorrichtung gemäß Anspruch 9, weiterhin **dadurch gekennzeichnet, dass** jeder der Fließarme eine dritte Zone (40) in Fließkommunikation mit der zweiten Zone enthält, um den Materialfluss in die eine oder mehr Formdüsen (46) zu lenken, wobei die untere Wand der dritten Zone im allgemeinen bündig mit der planaren oberen Fläche des flusslenkenden Einsatzes ist.

11. Die Vorrichtung gemäß Anspruch 9, weiterhin **dadurch gekennzeichnet, dass** jeder der Fließarme eine dritte Zone (40) in Fließkommunikation mit der zweiten Zone enthält, um den Materialfluss in die eine oder mehr Formdüsen (46) zu lenken, wobei der unteren Wand der dritten Zone eine Ebene zugeordnet ist, die von der Ebene der oberen Fläche des flusslenkenden Einsatzes beabstandet ist.

12. Die Vorrichtung gemäß Anspruch 10, weiterhin **dadurch gekennzeichnet, dass** der flusslenkende Einsatz (34A) eine zugehörige maximale seitliche Breite hat; und jede der dritten Zonen (40) eine Austrittsöffnung (44) enthält, wobei der Austrittsöffnung eine Austrittsöffnungsbreite zugeordnet ist, wobei die Austrittsöffnungsbreite größer ist als die zugehörige maximale seitliche Breite des flusslenkenden Einsatzes.

13. Die Vorrichtung gemäß Anspruch 11, weiterhin **dadurch gekennzeichnet, dass** der flusslenkende Einsatz (34A) eine zugehörige maximale seitliche Breite hat; und jede der dritten Zonen (40) eine Austrittsöffnung (44) enthält, wobei der Austrittsöffnung eine Austrittsöffnungsbreite zugeordnet ist, wobei die Austrittsöffnungsbreite größer ist als die zugehörige maximale seitliche Breite des flusslenkenden Einsatzes.

14. Die Vorrichtung gemäß Anspruch 10, weiterhin **dadurch gekennzeichnet, dass** jeder der Fließarme eine dritte Zone (40) enthält; und durch eine jeder der dritten Zonen gemeinsame Austrittsöffnung (44).

15. Die Vorrichtung gemäß Anspruch 11, weiterhin **dadurch gekennzeichnet, dass** jeder der Fließarme eine dritte Zone (40) enthält; und durch eine jeder der dritten Zonen gemeinsame Austrittsöffnung (44).

16. Die Vorrichtung gemäß Anspruch 9, wobei α zwischen 40° und 120° beträgt.

17. Die Vorrichtung gemäß Anspruch 9, wobei die obere Wand und die untere Wand des Fließkanals in der zweiten Zone in einem Winkel β zueinander angeordnet sind, um eine allmähliche Abnahme in einer Kanalhöhe in der zweiten Zone zu bewerkstelligen.

18. Die Vorrichtung gemäß Anspruch 17, wobei der Winkel β zwischen 5° und 30° beträgt.

19. Ein flusslenkender Einsatz (34A) zur Verwendung in einer Vorrichtung (8) zum Lenken des Flusses von Polymermaterial von einer Zufuhrquelle zu einer oder mehr Formdüsen gemäß einem der Ansprüche 1 bis 18, wobei der flusslenkende Einsatz eine dreieckige untere Fläche (43), eine dreieckige obere Fläche (41) nicht-parallel zu der unteren Fläche (43), und abfallende Seitenflächen (42), die sich zwischen der unteren Fläche und der oberen Fläche erstrecken, aufweist, wobei der flusslenkende Einsatz (34A) **dadurch gekennzeichnet ist, dass** die Seitenflächen (42) einander schneiden, um eine vorwärts gerichtete Kante zu bilden.

## Revendications

1. Appareil (8) pour diriger l'écoulement d'une matière polymère à partir d'une source d'alimentation jusqu'à une ou plusieurs filières de façonnement, l'appareil contenant un canal d'écoulement (10), le canal d'écoulement possédant une entrée (12) communiquant avec un orifice d'alimentation pour la réception de la matière, le canal d'écoulement étant défini par des parois latérales opposées (38, 39), par une paroi supérieure (50) et par une paroi inférieure (48), le canal d'écoulement englobant une région en aval (11) possédant une première zone (26) mise en communication d'écoulement avec l'entrée et une deuxième zone (28) mise en communication d'écoulement avec la première zone, les première et deuxième zones étant associées à une ligne médiane commune (18A), les parois latérales de la deuxième zone divergeant dans des directions latérales opposées généralement symétriques par rapport à la ligne médiane et en formant un angle α, l'appareil étant **caractérisé par le fait que :**
la paroi supérieure (50) est disposée dans un plan commun à travers les première et deuxième zones (26, 28), et
une pièce rapportée dirigeant l'écoulement (34A) est disposée dans la deuxième zone (28) en position adjacente à la paroi inférieure (48) tout en étant espacée des parois latérales opposées (38, 39), la pièce rapportée de direction de l'écoulement possédant des surfaces latérales inclinées (42) qui se coupent à une surface supérieure généralement plane (41), la surface supérieure étant espacée de la paroi supérieure (50), tout en étant généralement parallèle.

2. Appareil selon la revendication 1, **caractérisé en outre par :**
une troisième zone (40) mise en communication d'écoulement avec la deuxième zone pour diriger l'écoulement de la matière dans lesdites une ou plusieurs filières de façonnement (46), la paroi inférieure de la troisième zone étant disposée généralement à fleur avec la surface supérieure plane de la pièce rapportée de direction de l'écoulement.

3. Appareil selon la revendication 1, **caractérisé en outre par :**
une troisième zone (40) mise en communication d'écoulement avec la deuxième zone pour diriger l'écoulement de la matière dans lesdites une ou plusieurs filières de façonnement (46), la paroi inférieure de la troisième zone étant associée à un plan espacé du plan de la surface supérieure de la pièce rapportée de direction de l'écoulement.

4. Appareil selon la revendication 2, **caractérisé en outre par le fait que :**
la pièce rapportée de direction de l'écoulement (34A) possède une largeur latérale maximale associée ; et **par le fait que** la troisième zone englobe un orifice de sortie (44), l'orifice de sortie étant associé à une largeur d'orifice de sortie, la largeur de l'orifice de sortie étant supérieure à la largeur latérale maximale associée de la pièce rapportée de direction de l'écoulement.

5. Appareil selon la revendication 3, **caractérisé en outre par le fait que :**
la pièce rapportée de direction de l'écoulement (34A) possède une largeur latérale maximale associée ; et **par le fait que** la troisième zone englobe un orifice de sortie (44), l'orifice de sortie étant associé à une largeur d'orifice de sortie, la largeur de l'orifice de sortie étant supérieure à la largeur latérale maximale associée de la pièce rapportée de direction de l'écoulement.

6. Appareil selon la revendication 1, dans lequel la valeur α s'élève entre 40° et 120°.

7. Appareil selon la revendication 1, dans lequel la paroi supérieure et la paroi inférieure du canal d'écoulement de la deuxième zone sont disposées en formant un angle β l'une par rapport à l'autre pour obtenir une diminution progressive de la hauteur du canal dans la deuxième zone.

8. Appareil selon la revendication 7, dans lequel la valeur β s'élève entre 5° et 30°.

9. Appareil (8) selon la revendication 1, dans lequel la région en aval (11) possède une paire de branches d'écoulement divergentes (15A, 15B) mises en communication d'écoulement avec l'entrée, chacune des branches d'écoulement étant définie par des parois latérales opposées (38, 39), par une paroi supérieure (50) et par une paroi inférieure (48) et englobant un première zone (26) mise en communication d'écoulement avec l'entrée et une deuxième zone (28) mise en communication d'écoulement avec la première zone, les première et deuxième zones étant associées à une ligne médiane commune (18A, 18B), les parois latérales de la deuxième zone divergeant dans des directions latérales opposées généralement symétriques par rapport à la ligne médiane et en formant un angle α, l'appareil englobant un moyen pour restreindre l'écoulement de la matière polymère le long des lignes médianes (18A, 18B) tout en pressant la matière polymère en direction des parois latérales opposées respectives (38, 39).

10. Appareil selon la revendication 9, **caractérisé en outre par le fait que :**
chacune des branches d'écoulement englobe une troisième zone (40) mise en communication d'écoulement avec la deuxième zone pour diriger l'écoulement de la matière dans lesdites une ou plusieurs filières de façonnement (46), la paroi inférieure de la troisième zone étant disposée généralement à fleur avec la surface supérieure plane de la pièce rapportée de direction de l'écoulement.

11. Appareil selon la revendication 9, **caractérisé en outre par le fait que :**
chacune des branches d'écoulement englobe une troisième zone (40) mise en communication d'écoulement avec la deuxième zone pour diriger l'écoulement de la matière dans lesdites une ou plusieurs filières de façonnement (46), la paroi inférieure de la troisième zone étant associée à un plan espacé du plan de la surface supérieure de la pièce rapportée de direction de l'écoulement.

12. Appareil selon la revendication 10, **caractérisé en outre par le fait que :**
la pièce rapportée de direction de l'écoulement (34A) possède une largeur latérale maximale associée ; et **par le fait que** chacune des troisièmes zones (40) englobe un orifice de sortie (44), l'orifice de sortie étant associé à une largeur d'orifice de sortie, la largeur de l'orifice de sortie étant supérieure à la largeur latérale maximale associée de la pièce rapportée de direction de l'écoulement.

13. Appareil selon la revendication 11, **caractérisé en outre par le fait que :**
la pièce rapportée de direction de l'écoulement (34A) possède une largeur latérale maximale associée ; et **par le fait que** chacune des troisièmes zones englobe un orifice de sortie (44), l'orifice de sortie étant associé à une largeur d'orifice de sortie, la largeur de l'orifice de sortie étant supérieure à la largeur latérale maximale associée de la pièce rapportée de direction de l'écoulement.

14. Appareil selon la revendication 10, **caractérisé en outre par le fait que :**
chacune des branches d'écoulement englobe une troisième zone (40) ; et
**caractérisé par** un orifice de sortie (44) commun à chacune des trois zones.

15. Appareil selon la revendication 11, **caractérisé en outre par le fait que** :
chacune des branches d'écoulement englobe une troisième zone (40) ; et
**caractérisé par** un orifice de sortie (44) commun à chacune des trois zones.

16. Appareil selon la revendication 9, dans lequel la valeur α s'élève entre 40° et 120°.

17. Appareil selon la revendication 9, dans lequel la paroi supérieure et la paroi inférieure du canal d'écoulement de la deuxième zone sont disposées en formant un angle β l'une par rapport à l'autre pour obtenir une diminution progressive de la hauteur du canal dans la deuxième zone.

18. Appareil selon la revendication 17, dans lequel la valeur β s'élève entre 5° et 30°.

19. Pièce rapportée de direction de l'écoulement (34A) à utiliser dans un appareil (8) pour diriger l'écoulement d'une matière polymère à partir d'une source d'alimentation jusqu'à une ou plusieurs filières de façonnement, selon l'une quelconque des revendications 1 à 18, la pièce rapportée de direction de l'écoulement possédant une surface inférieure triangulaire (43), une surface supérieure triangulaire (41) qui n'est pas parallèle à la surface inférieure (43) et des surfaces latérales inclinées (42) s'étendant entre la surface inférieure et la surface supérieure, la pièce rapportée de direction d'écoulement (34A) étant
**caractérisée par le fait que :**
les surfaces latérales (42) se coupent pour former un bord antérieur.
